# EUROPÄISCHE PATENTSCHRIFT

(11) **EP 2 152 542 B1**
(45) Veröffentlichungstag und Bekanntmachung des Hinweises auf die Patenterteilung: **11.04.2012**
(21) Anmeldenummer: 07764351.8
(22) Anmeldetag: 07.06.2007
(51) Int. Cl.: B60Q 1/04

(54) **FRONTENDMODUL FÜR FAHRZEUGE**
FRONT END MODULE FOR VEHICLES
MODULE D'EXTRÉMITÉ AVANT POUR VÉHICULES

(30) Priorität: 19.02.2007 DE 102007008489
(43) Veröffentlichungstag der Anmeldung: 17.02.2010
(60) Teilanmeldung: 10191307.7
(73) Patentinhaber: HBPO GmbH, 59552 Lippstadt (DE)
(72) Erfinder: DOWE, Michael, 33739 Bielefeld (DE); OPPERBECK, Guido, 59558 Lippstadt (DE); SCHÖNING, Ralf, 33442 Herzebrock-Clarholz (DE); SCHLÜTER, Sascha, 89346 Bühl (DE); SCHÄFERGOCKEL, Frank, 33106 Paderborn (DE)
(74) Vertreter: Ostermann, Thomas
(86) Internationale Anmeldenummer: PCT/DE2007/000999
(87) Internationale Veröffentlichungsnummer: WO 2008/101451

(56) Entgegenhaltungen:
- EP-A- 1 502 841
- EP-A- 1 772 353
- DE-A1- 4 133 002
- DE-A1-102005 053 423
- DE-A1-102005 057 116
- FR-A1- 2 857 645
- JP-A- 2004 351 959
- KR-A- 20040 085 401

## Beschreibung

Die Erfindung betrifft ein Frontendmodul für Fahrzeuge nach dem Oberbegriff des Patentanspruchs 1.

Aus der DE 10 2005 037 816 A1 ist ein Frontendmodul für Fahrzeuge bekannt, bei dem eine Leuchteinheit mittels einer Halteeinrichtung an einem Trägerteil des Frontendmoduls befestigt ist. Die Halteeinrichtung umfasst eine Mehrzahl von verteilt randseitig an der Leuchteinheit abragender Laschen, die jeweils Durchgangsöffnungen aufweisen, so dass die Laschen mittels Schrauben an dem Trägerteil fixierbar sind. Ferner ist ein Halter vorgesehen, zu dem die Lasche verschiebbar angeordnet ist, so dass eine Justierung zur Einstellung eines vorgegebenen Fugenverlaufes der Leuchteinheit zu umgebenden Karosserieteilen in zwei zueinander senkrecht verlaufenden Justierrichtungen erfolgen kann. Ein Demontieren und anschließendes Montieren der Leuchteinheit zu Reparaturzwecken ist relativ aufwändig, da nach dem Demontieren der Leuchteinheit dieselbe wieder über Befestigungsmittel an dem Trägerteil befestigt und ausgerichtet werden muss.

Aus der DE 43 11 419 C2 ist es bekannt, eine Leuchteinheit über eine Führungseinrichtung an einer Aufnahme eines Karosserieteils zu befestigen. Die Leuchteinheit ist über Zapfen mit der Führungseinrichtung gekoppelt und kann relativ zu der Führungseinrichtung entlang einer vorgegebenen Verstellbahn aus einer Betriebsstellung, in der die Leuchteinheit mit der Führungseinrichtung verriegelt ist, entfernt werden, so dass die Leuchteinheit aus der Karosserieöffnung entnommen werden kann und Reparaturarbeiten durchgeführt werden können. Dadurch, dass die Leuchteinheit nur mit der Führungseinrichtung verbindbar bzw. verriegelbar ist, kann bei Montage der Leuchteinheit in der Karosserieöffnung ein erneutes Ausrichten der Leuchteinheit in Bezug auf die Karosserieöffnung vermieden werden. Nachteilig an der bekannten Befestigungsvorrichtung für eine Leuchteinheit an dem Karosserieteil des Fahrzeugs ist, dass der Befestigungsaufwand relativ hoch ist.

Aus der KR 2004 0085401 A und der EP 1 502 841 A1 ist ein Frontendmodul für Fahrzeuge mit einem Trägerteil zur Verbindung des Frontendmoduls mit einem Karosserieteil des Fahrzeugs bekannt. Zur Befestigung der Leuchteinheit an dem Trägerteil ist eine Halteeinrichtung vorgesehen. Die Halteeinrichtung weist einen mit dem Trägerteil verbundenen Haltearm auf, in dem Befestigungsmittel integriert angeordnet sind. Diese Befestigungsmittel dienen zugleich als Führung bei der Montage bzw. Demontage der Leuchteinheit.

Aus der JP 2004 351959 A ist ein Frontendmodul für Fahrzeuge bekannt, bei dem von einem Trägerteil ein Haltearm abragt. Dieser Haltearm weist Befestigungs-/Führungsmittel auf, die lediglich ein Entfernen der Leuchteinheit von dem Trägerteil ermöglichen, ohne dass die Leuchteinheit eine vordere Reparaturstellung einnehmen kann.

Aufgabe der vorliegenden Erfindung ist es daher, ein Frontendmodul derart weiterzubilden, dass mit geringem Handhabungsaufwand eine Demontage der Leuchteinheit zu Reparaturzwecken ermöglicht wird, wobei nach wiedererfolgter Montage der Leuchteinheit eine Ausrichtung in Bezug auf einen Fugenverlauf zu umgebenden Karosserieteilen nicht erforderlicht ist.

Zur Lösung dieser Aufgabe weist die Erfindung die Merkmaledes Patentanspruchs lauf.

Der besondere Vorteil der Erfindung besteht darin, dass durch die erfindungsgemäße Ausbildung einer geradlinigen Verstellbahn die Leuchteinheit aus einer Betriebsstellung, in der die Leuchteinheit fest mit dem Trägerteil verbunden ist, in eine definierte Reparaturstellung bringbar ist, in der ein vergrößerter Zugangsraum hinter der Leuchteinheit gegeben ist für beispielsweise einen Leuchtmittelwechsel derselben. Vorteilhaft ermöglicht lediglich das Lösen von vom Motorraum zugänglichen Befestigungsmitteln die Verstellbarkeit der Leuchteinheit entlang der gradlinigen Verstellbahn. Der Handhabungsaufwand für die Bedienperson ist somit relativ gering, da die vorzugsweise eine parallele Wirkrichtung zueinander aufweisenden Befestigungsmittel derart ausgebildet sind, dass sie ohne Werkzeug betätigbar sind. Vorteilhaft ermöglicht die Haltefläche zum einen eine Führung der Leuchteinheit bei der Bewegung zwischen der Betriebsstellung und der Reparaturstellung und vice versa und zum anderen eine Befestigungs- bzw. Haltefunktion der Leuchteinheit an dem Trägerteil zumindest bei der Montage der Leuchteinheit. Nach der Erfindung weist der Haltearm in einem vorderen Bereich desselben einen aufrechten Anschlag auf, so dass in der Reparaturstellung ein von einer Unterseite der Leuchteinheit abragender Ansatz an dem Anschlag zur Anlage kommt. Hierdurch wird eine definierte Reparaturstellung vorgegeben, die einen ausreichenden Zugangsraum an der Rückseite der Leuchteinheit für einen Leuchtmittelwechsel derselben bereitstellt.

Nach einer bevorzugten Ausführungsform der Erfindung weist eine Halteeinrichtung für die Leuchteinheit einen mit dem Tragteil verbundenen Haltearm auf, in dem die Führungsmittel integriert angeordnet sind. Vorteilhaft ist hierdurch die Leuchteinheit direkt mit dem Haltearm bzw. dem Tragteil verbunden, so dass der Herstellungsaufwand für das Bereitstellen einer geradlinigen Verstellbahn relativ gering ist.

Nach einer Weiterbildung der Erfindung weist der Haltearm einen Haltesteg auf, der über Befestigungsmittel mit dem Trägerteil verbunden ist. Vorzugsweise ist der Haltearm derart ausgebildet, dass ein Toleranzausgleich zwischen der Leuchteinheit und einem die Karosserieöffnung begrenzenden Karosserieteil zur Bildung eines vorgegebenen Fugenverlaufs erfolgen kann.

Nach einer Weiterbildung der Erfindung ist der Haltearm zumindest bereichsweise nachgiebig ausgebildet, so dass ein Toleranzausgleich zwischen der Leuchteinheit und einem die Karosserieöffnung begrenzenden Karosserieteil begünstigt wird. Vorteilhaft kann hierdurch ein vorgegebener Fugenverlauf erzielt werden, wobei vorzugsweise der Haltearm über auf einer ersten Seite über einen stabilisierenden Haltesteg mit dem Trägerteil und auf einer gegenüberliegenden Seite mit einem Seitenteil (Kotflügel) des Karosserieteils verbindbar ist.

Nach einer Weiterbildung der Erfindung ist der von der Leuchteinheit abragende Ansatz in einem solchen Abstand zu einer vorderen Kante der Abschlussscheibe der Leuchteinheit angeordnet, dass ein ausreichend langer Verstellweg zwischen der Betriebsstellung und der Reparaturstellung gewährleistet ist. Zum Einnehmen der Reparaturstellung ist lediglich das Lösen der Befestigungsmittel zwischen der Leuchteinheit und dem Trägerteil bzw. dem Haltearm sowie das manuelle Verschieben der Leuchteinheit erforderlich.

Nach einer Weiterbildung der Erfindung weist der Haltearm eine Haltefläche auf, in der vorzugsweise zwei parallel zueinander ausgerichtete Führungsmittel integriert angeordnet sind. Die Führungsmittel sind jeweils als eine Schiene ausgebildet, in der ein Schlittenelement der Leuchteinheit verschieblich in Verstellrichtung angeordnet ist.

Nach einer Weiterbildung der Erfindung ist der Haltearm L-förmig ausgebildet und ist zumindest in einem Eckbereich nachgiebig ausgestaltet. Vorteilhaft kann hierdurch ein Ausgleich von Fertigungstoleranzen zwischen der Leuchteinheit und dem oder den die Leuchteinheit umgebenden Karosserieteilen in X- und Y- und gegebenenfalls in Z-Richtung erfolgen, wobei gleichzeitig eine Anbindung des Haltearms an einem teilweise den Fugenverlauf bildenden Seitenteil vorliegt.

Nach einer Weiterbildung der Erfindung ist eine Lasche segmentiert ausgebildet und weist zum einen ein erstes Laschenelement auf, das über Befestigungsmittel mit einem Trägerteil des Frontendmoduls verbunden ist, und zum anderen ein zweites Laschenelement auf, das mit der Leuchteinheit verbunden ist. Dadurch, dass das erste Laschenelement und das zweite Laschenelement über Befestigungsmittel lösbar miteinander verbunden sind, kann die Leuchteinheit von dem Trägerteil für Reparaturarbeiten entfernt und nachfolgend wieder an dem Trägerteil befestigt werden, ohne dass eine erneute Ausrichtung der Leuchteinheit zu benachbarten Karosserieteilen erforderlich ist. Dies wird dadurch ermöglicht, dass das erste Laschenelement und das zweite Laschenelement in der Betriebsstellung stets in einer definierten gleichen Relativlage zueinander angeordnet sind. Hierdurch wird stets der gleiche Fugenverlauf am Rand der Karosserieöffnung gewährleistet. Nach der Erfindung ermöglicht die erfindungsgemäße Lasche eine Befestigung der Leuchteinheit an dem Trägerteil, wobei die Lasche zwei Befestigungsorte bzw. -punkte aufweist. Der erste Befestigungsort dient zur Befestigung des ersten Laschenelementes mit dem Trägerteil. Der zweite Bestigungsort dient zur Befestigung des zweien Laschenelementes mit dem ersten Laschenelement, wobei das zweite Laschenelement vorzugsweise einstückig mit der Leuchteinheit verbunden ist. Vorteilhaft kann die erfindungsgemäße Lasche ein einfaches Lösen und Befestigen der Leuchteinheit an dem Trägerteil ermöglichen, wobei nach Wiederbefestigung der Leuchteinheit die vorgegebene definierte Relativlage der Leuchteinheit zu dem Trägerteil wieder hergestellt ist. Dies wird dadurch gewährleistet, dass das erste Laschenelement und/oder das zweite Laschenelement derart ausgebildet sind, dass sie zur Fixierung der Leuchteinheit an dem ersten Laschenelement eine definierte Relativlage zueinander einnehmen. Nach einer bevorzugten Ausführungsform der Erfindung weist das erste Laschenelement und/oder das zweite Laschenelement eine Führungsfläche auf, entlang derer das erste Laschenelement und das zweite Laschenelement relativ zueinander führbar sind. Vorteilhaft kann hierdurch die Bewegung der Leuchteinheit aus der Betriebsstellung in die Reparaturstellung und vice versa erleichtert werden.

Nach einer Weiterbildung der Erfindung ist das erste Laschenelement kraftschlüssig oder formschlüssig mit dem zweiten Laschenelement verbindbar. Während das erste Laschenelement im Wesentlichen dazu dient, die Leuchteinheit entsprechend eines vorgegebenen Fugenverlaufes zu Karosserieteilen des Fahrzeugs auszurichten, ermöglicht das lösbar zu dem ersten Laschenelement angeordnete zweite Laschenelement ein Lösen der Leuchteinheit von dem Trägerteil. Durch das Vorsehen von Kopplungsmitteln des ersten Laschenelementes einerseits und des zweiten Laschenelementes andererseits kann eine Wiederbefestigung der Leuchteinheit an dem Trägerteil erzielt werden, so dass eine voreingestellte Position der Leuchteinheit wieder eingenommen werden kann.

Nach einer Weiterbildung der Erfindung erfolgt die Befestigung des ersten Laschenelementes und des zweiten Laschenelementes über Befestigungsmittel, deren Wirkrichtung parallel zueinander ausgerichtet und vorzugsweise orthogonal zu der Stellrichtung der Leuchteinheit orientiert ist. Hierdurch ergibt sich eine vereinfachte Montage bzw. Demontage der Leuchteinheit.

Nach einer Weiterbildung der Erfindung ist die erfindungsgemäße Lasche in einem oberen Randbereich der Leuchteinheit und der Haltearm in einem unteren Randbereich der Leuchteinheit angeordnet. Vorteilhaft kann hierdurch die Handhabung vereinfacht werden, da zum Lösen bzw. Befestigen der Leuchteinheit zu Reparaturzwecken lediglich die Lasche betätigt werden muss. Der Haltearm weist die Führungsmittel auf, so dass die Leuchteinheit in Verstellrichtung zwischen der Betriebsstellung und der Reparaturstellung bewegbar angeordnet ist. Sofern die Leuchteinheit an dem Haltearm ohne Spiel quer zur Verstellrichtung (Y-Richtung) angeordnet ist, braucht die Lasche lediglich Kopplungsmittel umfassen, die eine definierte Relativlage der Laschenelemente zueinander in Verstellrichtung vorsehen.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine perspektivische Vorderansicht eines endseitigen Aufnahmebereichs eines Frontendmoduls für eine Leuchteinheit im nichtmontierten Zustand der Leuchteinheit,

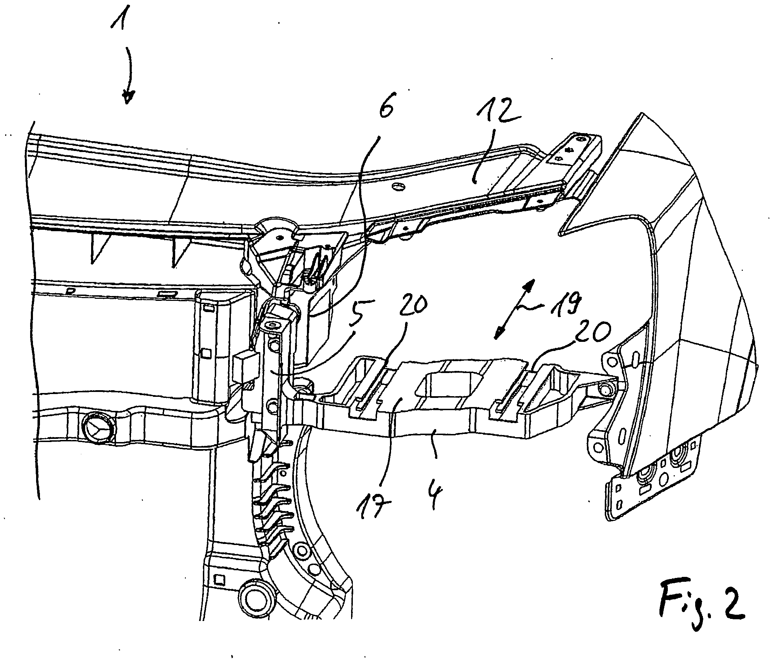

- Figur 2: eine perspektivische Vorderansicht des endseitigen Aufnahmebereichs des Frontendmoduls gemäß Figur 1 mit einem Trägerteil ohne Darstellung der Leuchteinheit, wobei auf einer der Fahrzeugmittelebene abgewandten Seite des Aufnahmebereichs ein Seitenteil an einem Haltearm des Trägerteils montiert ist,

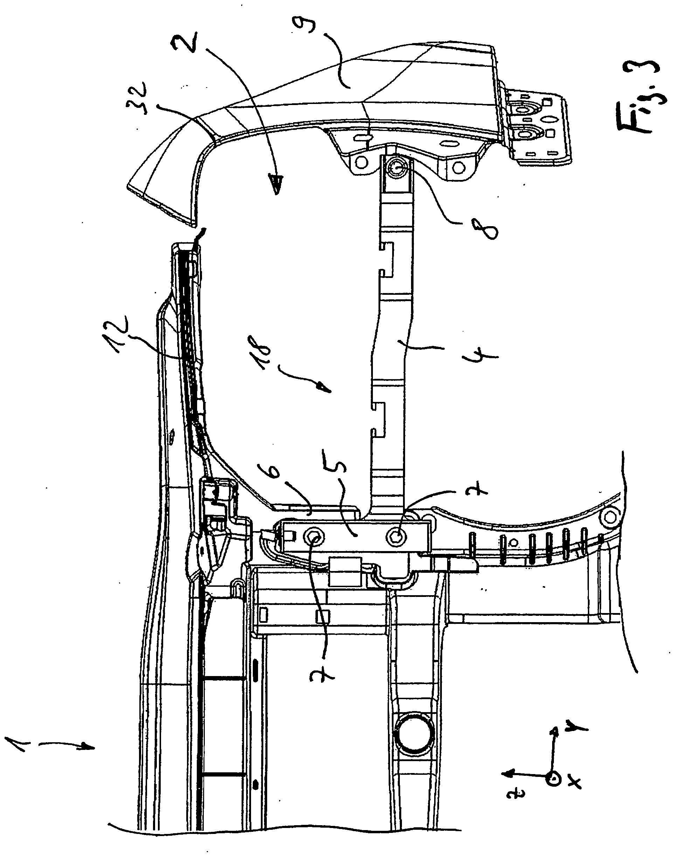

- Figur 3: eine Vorderansicht des endseitigen Aufnahmebereichs des Frontendmoduls ohne Darstellung der Leuchteinheit,
- Figur 4: eine perspektivische Vorderansicht eines mit dem Trägerteil des Frontendmoduls verbindbaren Haltearms enthaltend Führungsmittel zur geführten Verschiebung der Leuchteinheit in X-Richtung,

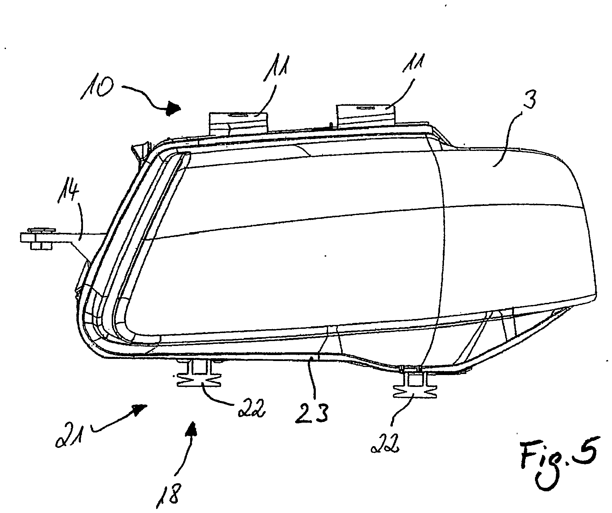

- Figur 5: eine Vorderansicht der Leuchteinheit,
- Figur 6: einen vertikalen Querschnitt durch das Trägerteil im Bereich der Aufnahme für die Leuchteinheit, die sich in der Betriebsstellung befindet, mit einem Haltearm nach einer alternativen Ausführungsform,
- Figur 7: eine perspektivische Teilansicht eines Frontendmoduls im Aufnahmebereich der Leuchteinheit von schräg oben mit einer Leuchteinheit in einer Betriebsstellung, wobei die Leuchteinheit an dem Trägerteil über eine Halteinrichtung nach einer zweiten Ausführungsform befestigt ist,
- Figur 8: eine perspektivische Ansicht des Aufnahmebereichs gemäß Figur 7 in einer Reparaturstellung der Leuchteinheit,
- Figur 9: eine perspektivische Teilansicht eines Frontendmoduls im Aufnahmebereich der Leuchteinheit von schräg oben mit einer Leuchteinheit in einer Betriebsstellung, wobei die Leuchteinheit an dem Trägerteil über eine Halteinrichtung nach einer dritten Ausführungsform befestigt ist,
- Figur 10: eine perspektivische Ansicht des Aufnahmebereichs gemäß Figur 9 in einer Reparaturstellung der Leuchteinheit,
- Figur 11: eine perspektivische Teilansicht eines Frontendmoduls im Aufnahmebereich der Leuchteinheit von schräg oben mit einer Leuchteinheit in einer Betriebsstellung, wobei die Leuchteinheit an dem Trägerteil über eine Halteinrichtung nach einer vierten Ausführungsform befestigt ist,
- Figur 12: eine perspektivische Ansicht des Aufnahmebereichs gemäß Figur 11 in einer Reparaturstellung der Leuchteinheit,
- Figur 13: eine perspektivische Teilansicht eines Frontendmoduls im Aufnahmebereich der Leuchteinheit von schräg oben mit einer Leuchteinheit in einer Betriebsstellung, wobei die Leuchteinheit an dem Trägerteil über eine Halteinrichtung nach einer fünften Ausführungsform befestigt ist,
- Figur 14: eine perspektivische Ansicht des Aufnahmebereichs gemäß Figur 13 in einer Reparaturstellung der Leuchteinheit,
- Figur 15: eine vergrößerte perspektivische Rückansicht der Leuchteinheit von schräg oben mit einem schwalbenschwanzförmigen zweiten Maschenelement,
- Figur 16: eine Vorderansicht eines Teils eines Frontendmoduls mit einem Scheinwerfer, der in einer Quer- richtung ausgerichtet zu einem Seitenteil der Fahrzeugkarosserie angeordnet ist,
- Figur 17: eine Vorderansicht einer Halteeinrichtung für den Scheinwerfer,
- Figur 18: eine vergrößerte Darstellung eines elastischen Abschnitts der Halteeinrichtung, in dem ein Einstellelement zur Verstellung des Scheinwerfers in Verstellrichtung angeordnet ist,
- Figur 19: eine perspektivische Seitenansicht des Einstellelementes und
- Figur 20: eine Draufsicht auf das Einstellelement.

Ein Frontendmodul erstreckt sich im Wesentlichen über die gesamte Breite eines Kraftfahrzeugs und wird in einem vorderen Bereich des Fahrzeugs an einem Fahrgestell montiert. Das Frontendmodul weist ein langgestrecktes Trägerteil 1 auf, das neben der Aufnahme eines Kühlaggregats und eines Stoßfänger an gegenüberliegenden Endbereichen Aufnahmen 2 zur Montage von Leuchteinheiten 3 aufweist.

Die Leuchteinheit 3, die vorzugsweise als Scheinwerfer ausgebildet ist und ein Gehäuse aufweist, ist über eine Halteeinrichtung an dem Trägerteil 1 befestigt.

Die Halteeinrichtung umfasst einen Haltearm 4, der auf einer der Fahrzeuglängsmittelachse zugewandten Seite über einen Haltesteg 5 mit einer Querstrebe 6 des Trägerteils 1 mittels Schraubverbindung verbunden ist. Zu diesem Zweck weist der Haltesteg 5 zwei Bohrungen auf, durch die jeweils eine Schraube 7 als Befestigungsmittel parallel zur Fahrtrichtung bzw. in X-Richtung einsetzbar und den Haltesteg 5 kraftschlüssig mit dem Trägerteil 1 verbindbar ist.

Auf einer der Fahrzeuglängsmittelachse abgewandten Seite des Haltearms 4, also an einem stirnseitigen Ende des Trägerteils 1, ist der Haltearm 4 über eine Schraube 8 als Befestigungsmittel mit einem Seitenteil 9 (Kotflügel) des Fahrzeugs verbunden. Alternativ kann das freie Ende des Haltearms 4 auch über eine Spreitzniet mit dem Seitenteil 9 verbunden sein.

Die Leuchteinheit 2 weist in einem oberen Randbereich 10 zwei in einem Abstand zueinander angeordnete Laschen 11 auf, mittels derer die Leuchteinheit 3 an einer Längsstrebe 12 des Trägerteils 1 befestigbar ist. Zu diesem Zweck weisen die Laschen 11 jeweils zu korrespondierenden Bohrungen der Längsstrebe 12 in der Betriebsstellung fluchtende Bohrungen 13 auf, durch die jeweils Schrauben als Befestigungsmittel eingreifen können. Die Laschen 11 erstrecken sich vorzugsweise horizontal, so dass die Befestigungsschrauben in Z-Richtung in die Laschen 11 eingreifen und diese kraftschlüssig mit der Längsstrebe 12 verbinden. Die Laschen 11, die Bohrungen der Längsstrebe 12 und die Schrauben sind Bestandteil der Halteeinrichtung.

Auf einer der Fahrzeugmittelachse zugewandten Seite ragt von der Leuchteinheit 3 in einem mittleren Bereich eine Innenlasche 14 ab mit einer Bohrung, so dass die Leuchteinheit 3 mittels einer Hohlschraube 15 an einer oberen Stirnseite 16 des Haltestegs 5 befestigbar ist.

Der Haltearm 4 weist eine ebene Haltefläche 17 auf, in der parallel zueinander in einem Abstand verlaufende Führungsmittel 18 integriert sind zur Führung der Leuchteinheit 3 entlang einer geradlinigen Verstellrichtung 19 aus einer Betriebsstellung der Leuchteinheit 3, in der dieselbe über die Laschen 11 bzw. 14 an dem Trägerteil 1 bzw. dem Haltearm 4 befestigt ist, in eine in Verstellrichtung 19 vor dem Trägerteil 1 liegende Reparaturstellung und umgekehrt. In der Reparaturstellung ist im rückseitigen Bereich der Leuchteinheit 3 genügend Raum geschaffen, um beispielsweise einen Leuchtmittelwechsel an der Leuchteinheit 3 vornehmen zu können.

Damit die Leuchteinheit 3 in Verstellrichtung 19 bzw. in X-Richtung verschiebbar geführt ist, weist der Haltearm 4 zwei parallele Schienen 20 auf, die jeweils als eine im Querschnitt C-förmige oder T-förmige Nut ausgebildet sind. An einem unteren Randbereich 21 der Leuchteinheit 3 ragen beabstandet und korrespondierend zu den jeweiligen Schienen 20 zwei Schlittenelemente 22 ab, die jeweils einen T-förmigen Querschnitt aufweisen, so dass die Leuchteinheit 3 nach Einschieben der Schlittenelemente 22 entlang der X-Richtung in die Schienen 20 sowohl in Y-Richtung als auch in Z-Richtung festgelegt ist.

Die Länge der Schienen 20 gibt den maximalen Verstellweg S zwischen der Betriebsstellung und der Reparaturstellung der Leuchteinheit 3 vor.

Das Schlittenelement 22 befindet sich vorzugsweise in einem hinteren Bereich einer Unterseite 23 oder Leuchteinheit 3, so dass sich das Schlittenelement 22 in der Betriebsstellung der Leuchteinheit 3 an einem hinteren Ende 24 der Schiene 20 und in der Reparaturstellung der Leuchteinheit 3 an einem vorderen Ende 25 der Schiene 20 befindet.

Die Reparaturstellung der Leuchteinheit 3 wird dadurch definiert, dass eine untere Kante der Leuchteinheit 3 an einer nicht dargestellten Stoßfängerfixierung anschlägt.

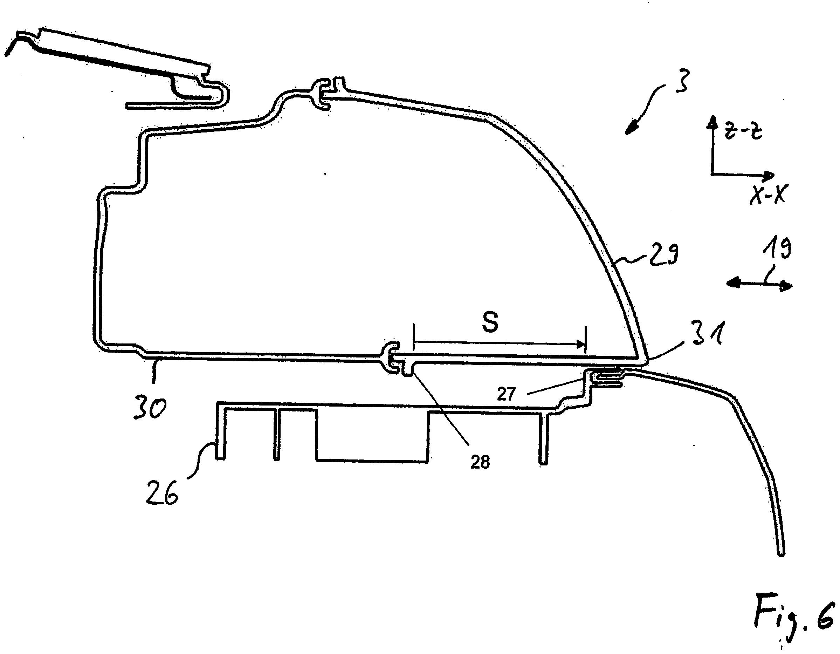

Nach einer alternativen Ausführungsform eines Haltearms 26 gemäß Figur 6 kann dieser in einem vorderen Bereich einen in Z-Richtung nach oben weisenden Anschlag 27 aufweisen, gegen den ein in vertikaler Richtung nach unten abragender Ansatz 28 der Leuchteinheit 3 in der Reparaturstellung anschlägt. Beispielsweise kann der Ansatz 28 der Leuchteinheit 3 durch einen in Verstellrichtung 19 nach hinten versetzten Absatz einer Abschlussscheibe 29 gebildet sein, der zur Befestigung der Abschlussscheibe 29 an einem Gehäuse 30 der Leuchteinheit 3 dient. Der maximale Verstellweg S ist abhängig von dem Abstand des Ansatzes 28 zu einer vorderen Kante 31 der Abschlussscheibe 29. Der maximale Verstellweg S wird festgelegt durch den Abstand des Ansatzes 28 der Leuchteinheit 3 zu dem Anschlag 27 des Haltearms 26 in der Betriebsstellung der Leuchteinheit 3.

Der Haltearm 4 ist vorzugsweise aus einem nachgiebigen Material ausgebildet, so dass ein Ausgleich von Fertigungstoleranzen zwischen der Leuchteinheit 3 und Karosserieteilen, wie dem Seitenteil 9 sowie eines nicht dargestellten Stoßfängers, erzielt werden können. Beispielsweise kann der Haltearm 4 so befestigt werden, dass ein vorgegebener Fugenverlauf 32 zwischen der Leuchteinheit 3 und dem Seitenteil 9 eingestellt wird.

Damit das Lösen der Leuchteinheit 3 von dem Trägerteil 1 bzw. dem Haltesteg 5 erleichtert wird, können die Befestigungsmittel an den Laschen 11 bzw. an der Innenlasche 14 als werkzeugfreie Befestigungsschrauben ausgebildet sein, die ohne Zuhilfenahme von Werkzeug betätigbar sind.

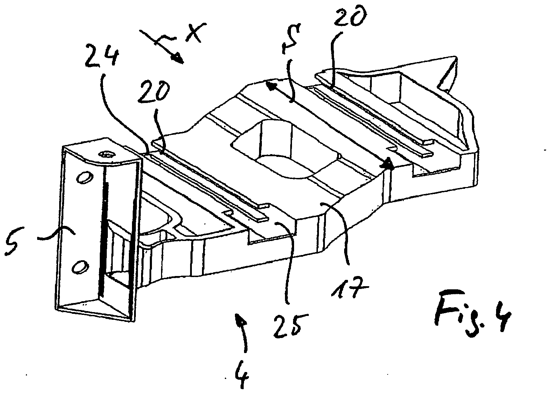

Wie insbesondere aus Figur 4 ersichtlich ist, ist der Haltearm 4 L-förmig ausgebildet. Der Haltearm 4 erstreckt sich senkrecht zu der Haltefläche 17 des Haltearms 4.

Vorzugsweise ist der Haltearm 4 in einem Eckbereich desselben nachgiebig ausgebildet, so dass ein Ausgleich von Fertigungstoleranzen in X- und Y-Richtung sowie gegebenenfalls in Z-Richtung bei Anbindung des Haltearms 4 an das Seitenteil 9 bzw. die Leuchteinheit 3 gegeben ist.

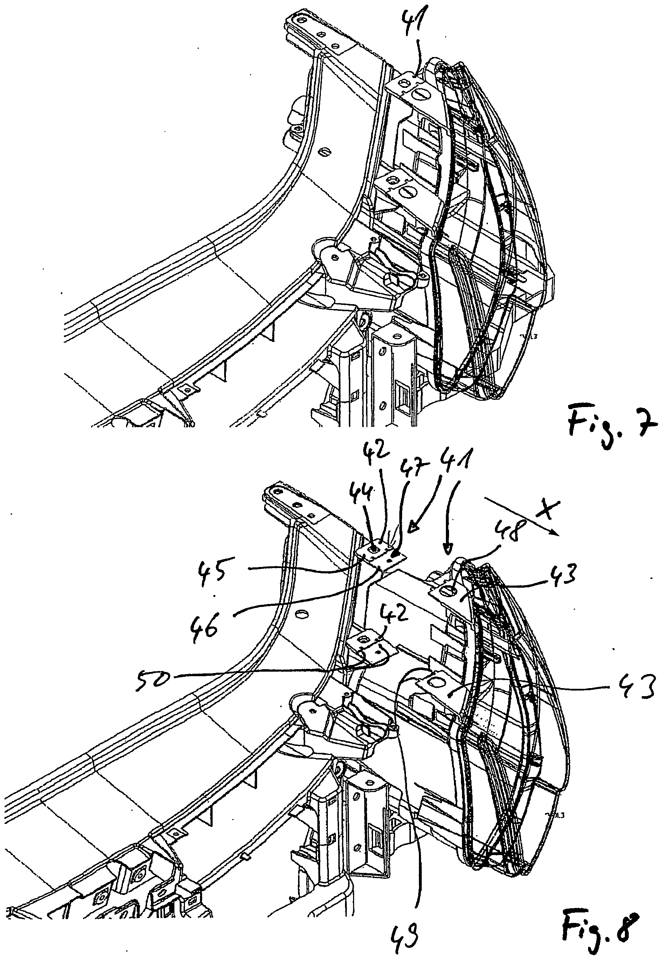

Nach einer alternativen Ausführungsform der Halteeinrichtung gemäß den Figuren 7 und 8 ist eine Lasche 41 der Leuchteinheit 3 segmentiert ausgebildet und weist ein erstes Laschenelement 42 und ein zweites Laschenelement 43 auf.

Das erste Laschenelement 42 dient vorzugsweise zur Ausrichtung der Leuchteinheit 3 in Bezug auf Karosserieteile, so dass ein vorgegebener Fugenverlauf gegeben ist.

Das zweite Laschenelement 43 ermöglicht vorzugsweise eine lagerichtige Anbindung der Leuchteinheit 3, wenn diese von der Reparaturstellung wieder in die Betriebsstellung verbracht wird.

Gleiche Bauteile bzw. Bauteilfunktionen der beschriebenen Ausführungsbeispiele sind mit den gleichen Bezugsziffern versehen.

Das erste Laschenelement 42 ist plattenförmig ausgebildet und weist eine erste Bohrung 44 auf, so dass es über ein nicht dargestelltes Befestigungsmittel an der Querstrebe 6 befestigbar ist. Das erste Laschenelement 42 weist einen in X-Richtung verlaufenden an einem die erste Bohrung 44 aufnehmenden ersten Abschnitt 45 anschließenden zweiten Abschnitt 46 auf, der eine zweite Bohrung 47 des ersten Laschenelementes 42 aufweist. Die zweite Bohrung 47 des zweiten Abschnitts 46 dient zur lösbaren Verbindung des ersten Laschenelementes 42 mit dem zweiten Laschenelement 43 in der Betriebsstellung der Leuchteinheit 3.

Das zweite Laschenelement 43 ist plattenförmig ausgebildet und einstückig an dem oberen Randbereich 10 der Leuchteinheit 3 verbunden. Das zweite Laschenelement 43 weist eine Bohrung 48 auf, die in der Betriebsstellung der Leuchteinheit 3 fluchtend zu der zweiten Bohrung 47 des ersten Laschenelementes 42 angeordnet ist. Die Leuchteinheit 3 kann mittels eines nicht dargestellten Befestigungsmittels, vorzugsweise einer Befestigungsschraube mit einem Kopf, der werkzeugfrei drehbar ist, an dem ersten Laschenelement 42 befestigt sein.

Nach der Erstmontage der Leuchteinheit 3 sind die beiden Laschenelemente 42 und 43 fest miteinander verbunden. Die Leuchteinheit 3 ist über an die erste Bohrung 44 des ersten Laschenelementes 42 angreifende Befestigungsmittel kraftschlüssig mit der Längsstrebe 12 des Trägerteils 1 verbunden.

Zum Verbringen der Leuchteinheit 3 aus der Betriebsstellung in eine vordere Reparaturstellung kann die Leuchteinheit 3 zusammen mit dem zweiten Laschenelement 43 nach Lösen desselben von dem ersten Laschenelement 42 vorzugsweise durch werkzeugfreies Lösen des den Bohrungen 47, 48 zugeordneten Befestigungsmittels in Verstellrichtung 19 (X-Richtung) verschoben werden, bis die Reparaturstellung durch Anschlagen einer Kante der Leuchteinheit 3 erreicht ist. Im vorliegenden Ausführungsbeispiel ist die Leuchteinheit 3 ausschließlich über die beiden Laschen 41 mit dem Trägerteil 1 verbunden. Eine zusätzliche Befestigung der Leuchteinheit 3 an dem Haltesteg 5 des Haltearms 4 - wie nach dem ersten Ausführungsbeispiel - ist nicht vorgesehen. Das Verschieben der Leuchteinheit 3 von der Betriebsstellung in die Reparaturstellung erfolgt geführt mittels der bereits oben beschriebenen Führungsmittel 18 des Haltearms 4 bzw. der Leuchteinheit 3.

In der Reparaturstellung kann ein Leuchtmittelwechsel vorgenommen werden. Nachfolgend kann die Leuchteinheit 3 wieder in die Betriebsstellung zurückbewegt werden, wobei sich das zweite Laschenelement 43 auf den als Führungsfläche ausgebildeten zweiten Abschnitt 46 des Laschenelementes 42 legt. Das zweite Laschenelement 43 weist an seinem freien Ende zwei zueinander beabstandete Nasen 49 auf, die in der Betriebsstellung in Ausnehmungen 50 des ersten Abschnitts 45 des ersten Laschenelementes 42 eingreifen.

Nach Auflage des zweiten Laschenelementes 43 auf den zweiten Abschnitt 46 des ersten Laschenelementes 42 und Eingreifen der Nasen 49 in die Ausnehmung 50 des ersten Laschenelementes 42 ist das zweite Laschenelement 43 in zwei orthogonal zueinander stehenden Stellrichtungen, die senkrecht zu der Verstellrichtung 19 verlaufen, also in Y- und in Z-Richtung, vorpositioniert angeordnet. Die Nase 49 bzw. die Ausnehmung 50 dienen zur Positionierung des ersten Laschenelementes 42 und des zweiten Laschenelementes 43 relativ zueinander in Y-Richtung. Die Führungsfläche 46 und das zweite Laschenelement 43 dienen zur Positionierung des ersten Laschenelementes 42 und des zweiten Laschenelementes 43 relativ zueinander in Z-Richtung. Sie dienen als Kopplungsmittel zur Vorpositionierung des zweiten Laschenelements 43 an dem ersten Laschenelement 42.

Nachdem die Positionierung der beiden Laschenelemente 42, 43 vorgenommen worden ist, kann mittels des Befestigungsmittels eine kraftschlüssige Verbindung zwischen dem ersten Laschenelement 42 und dem zweiten Laschenelement 43 erfolgen, wobei sich das Befestigungsmittel in Gewindeeingriff mit dem ersten Laschenelement 42 befindet.

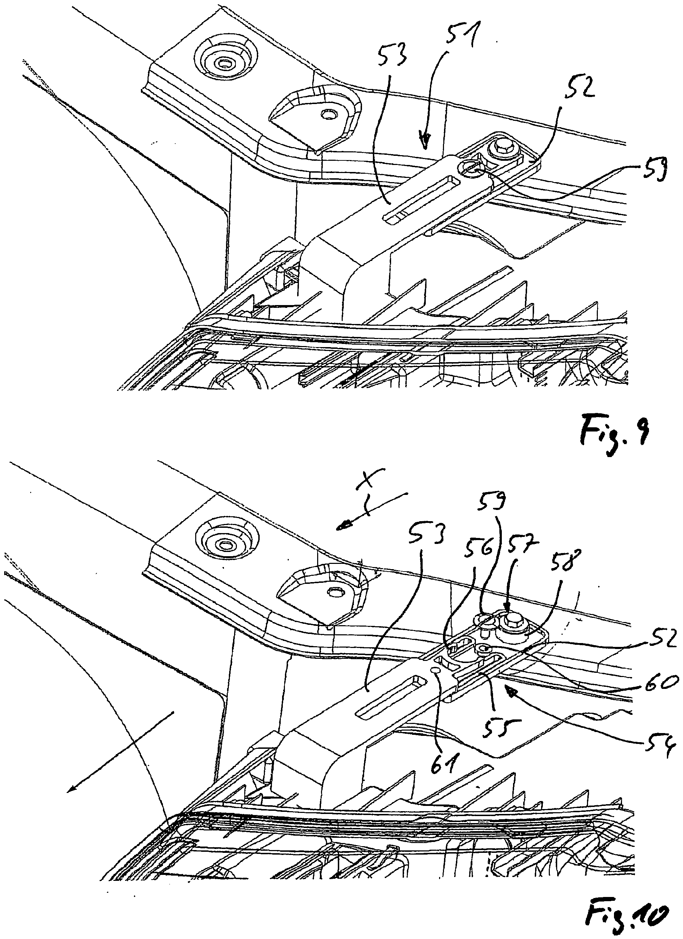

Nach einer weiteren Ausführungsform einer Halteeinrichtung kann eine Lasche 51 gemäß den Figuren 9 und 10 ausgebildet sein, die ein erstes Laschenelement 52 und ein zweites Laschenelemente 53 aufweist. Diese sind über unterschiedliche Kopplungsmittel miteinander vorpositionierbar. Im Unterschied zu dem vorhergehenden Ausführungsbeispiel weist das erste Laschenelement 52 einen in X-Richtung vorne liegenden zweiten Abschnitt 54 mit Führungsschlitzen 55 auf, so dass das zweite Laschenelement 53 geführt von der Reparaturstellung in die Betriebsstellung bringbar ist. Das zweite Laschenelement 53 weist ein klammerförmiges Ende 56 auf, das sich in der Betriebsstellung um einen eine erste Bohrung 57 des ersten Laschenelementes 52 umfassenden Halses 58 legt, so dass das zweite Laschenelement 53 in der Betriebsstellung relativ zu dem ersten Laschenelement 52 eine definierten Position in X-Richtung einnehmen kann. In dieser Position kann dann die Festlegung des zweiten Laschenelementes 53 an dem ersten Laschenelement 52 durch Betätigen eines Befestigungsmittels 59 (Befestigungsschraube) erfolgen, die in eine zweite Bohrung 60 des ersten Laschenelementes 52 und in eine Bohrung 61 des zweiten Laschenelementes 53 eingreift.

Nach einer nicht dargestellten alternativen Ausführungsform können die Führungsschlitze 55 auch offen ausgebildet sein. Wesentlich ist, dass das zweite Laschenelement 53 aus der Reparaturstellung in die Betriebsstellung spielfrei in Y-Richtung geführt wird.

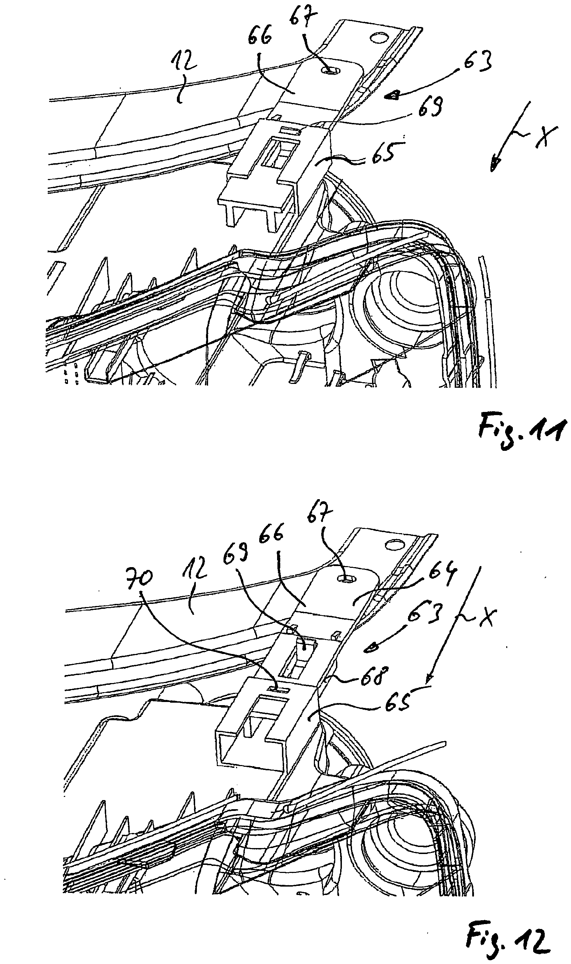

Nach einer weiteren Ausführungsform einer Halteeinrichtung gemäß den Figuren 11 und 12 ist eine Lasche 63 mit einem ersten Laschenelement 64 und einem zweiten Laschenelement 65 vorgesehen. Das erste Laschenelement 64 weist einen ersten Abschnitt 66 mit einer Bohrung 67 auf, mittels derer die Lasche 63 an der Längsstrebe 12 befestigbar ist. Ein zweiter Abschnitt 68 des ersten Laschenelementes 64 und das zweite Laschenelement 65 sind C-förmig bzw. doppel-T-förmig ausgebildet, so dass sie formschlüssig ineinandergreifen können. Die Festlegung in X-Richtung erfolgt durch eine Rastverbindung, wobei das erste Laschenelement 64 eine nachgiebige Rastnase 69 aufweist, die in eine schlitzförmige Ausnehmung 70 in der Betriebsstellung der Leuchteinheit 3 eingreift.

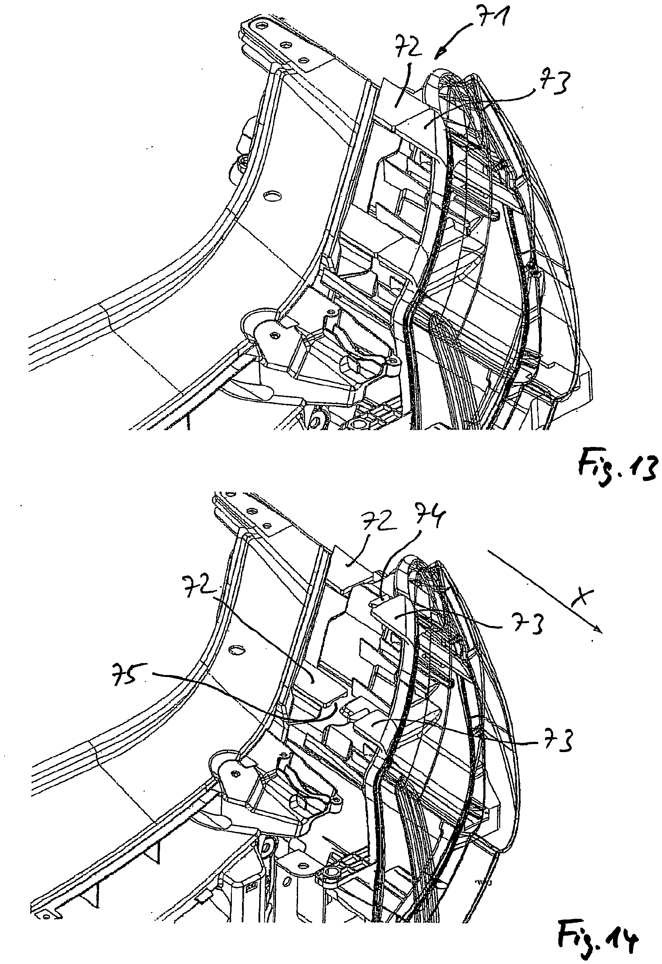

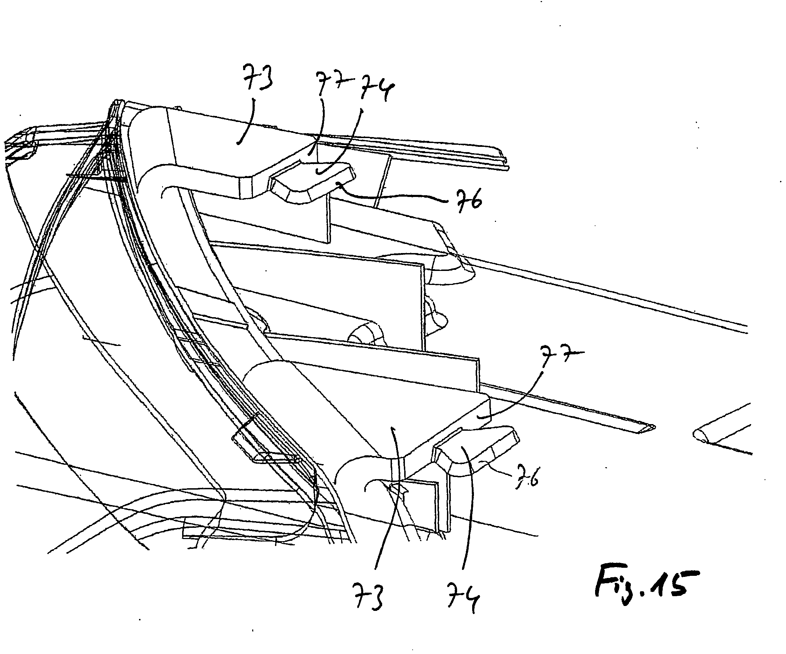

Nach einer weiteren Ausführungsform einer Halteeinrichtung gemäß den Figuren 13 bis 15 ist eine Lasche 71 mit einem ersten Laschenelement 72 und einem zweiten Laschenelement 73 vorgesehen, wobei das zweite Laschenelement 73 eine stirnseitig abragende Zunge 74 aufweist, die in der Betriebsstellung der Leuchteinheit 3 in an einer Unterseite des ersten Laschenelementes 72 angeordneten Nut 75 formschlüssig eingreift. Die Zunge 74 weist randseitig Einführschrägen 76 auf, die das Ansetzen des zweiten Laschenelementes 73 an dem ersten Laschenelement 72 erleichtern. Vorzugsweise weist auch die Nut 75 des ersten Laschenelementes 72 randseitig eine Einführschräge auf. Die Verbindung des ersten Laschenelementes 72 mit dem zweiten Laschenelement 73 erfolgt formschlüssig und frei von Befestigungsschrauben. Die sich zur Stirnseite 77 des zweiten Laschenelementes 73 verjüngenden Zungen 74 ermöglichen eine Schnappverbindung zwischen dem ersten Laschenelement 72 und dem zweiten Laschenelement 73.

Nach einer alternativen Ausführungsform der Erfindung kann die Verstellrichtung 19 auch in einem spitzen Winkel zu einer horizontalen Achse und/oder vertikalen Achse verlaufen. Beispielsweise kann somit die Leuchteinheit 3 schräg nach außen oder nach innen aus der Betriebsstellung in die Reparaturstellung bewegt werden.

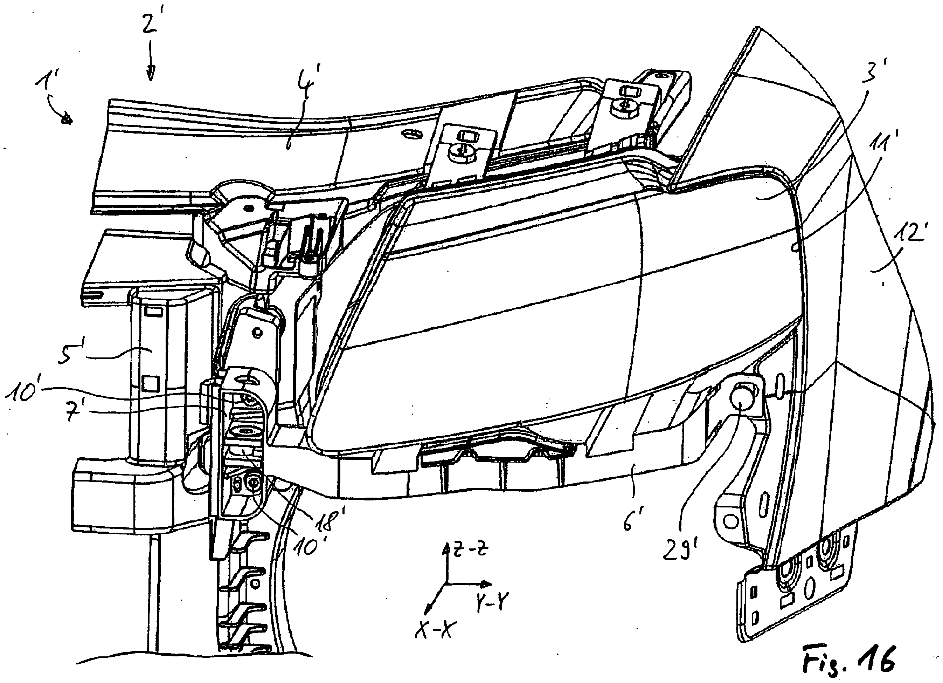

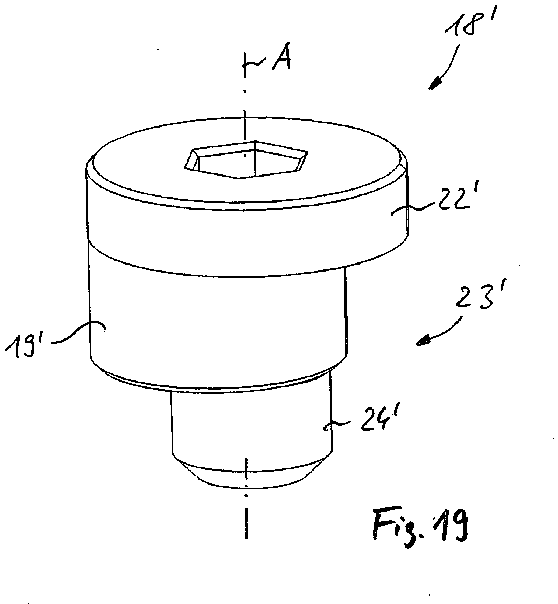

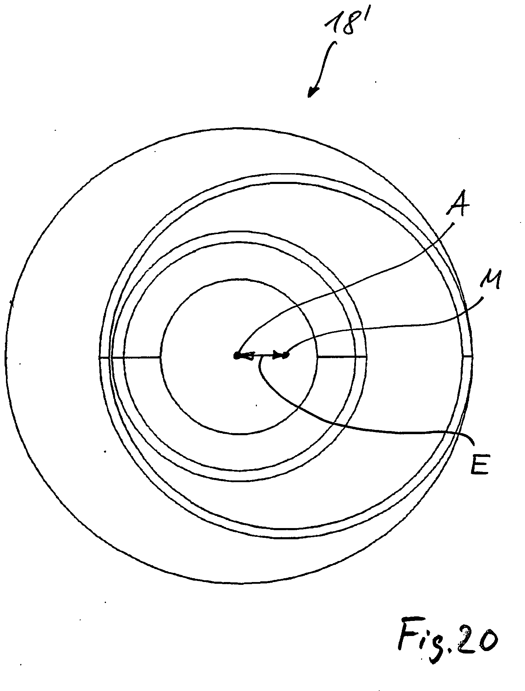

Ein Frontendmodul 1' gemäß nach einer weiteren Ausführungsform der Erfindung nach den Figuren 16 bis 20 weist einen Montageträger 2' auf zur Aufnahme von Bauteilen einer Motorkühlungsgruppe und/oder Bauteile einer Klimaanlage und/oder Bauteile eines Stoßfängerquerträgers und/oder eines Scheinwerfers 3'. Der Montageträger 2' weist eine obere Querstrebe 4' und eine nicht dargestellte untere Querstrebe sowie eine erste Vertikalstrebe 5' sowie eine beabstandet zu der ersten Vertikalstrebe 5' angeordnete nicht dargestellte zweite Vertikalstrebe auf. Die gegenüberliegenden Querstreben 4' sind durch die Vertikalstreben 5' miteinander verbunden.

Wie aus Figur 16 zu ersehen ist, ist ein Scheinwerfer 3' in einem Seitenbereich des Montageträgers 2' gehaltert, wobei die Halteeinrichtung zum einen einen den Scheinwerfer 3' tragenden Haltearm 6' und zum anderen einen Haltesteg 7' aufweist. Der Haltesteg 7' schließt sich an einem der Vertikalstrebe 5' zugewandten ersten Ende 8' des Haltearms 6' unmittelbar an und weist eine vertikal verlaufende Halteplatte 9' auf, die über Befestigungsmittel 10' (Schrauben) mit der Vertikalstrebe 5' des Montageträgers 2' verbunden ist.

Der Montageträger 2' ist bezüglich einer vertikalen Längsmittelebene des Frontendmoduls 1' symmetrisch ausgebildet. Die Scheinwerfer 3' erstrecken sich an gegenüberliegenden Endbereichen des Montageträgers 2' und grenzen in einer Endmontageposition des Haltearms 6' mit ihren äußeren Randkanten 11' unter Bildung einer Nullfuge an einem Seitenteil 12' (Kotflügel) der Fahrzeugkarosserie an.

Der Haltesteg 7' weist einen elastischen Abschnitt 13' auf. Der elastische Abschnitt 13' kann in einer parallel zu ersten Vertikalstrebe 5' verlaufenden Richtung gestaucht werden, so dass der einstückig mit demselben verbundene Haltearm 6' in einer senkrecht hierzu verlaufenden Verstellrichtung V hin- oder herbewegt werden kann. Der elastische Abschnitt 13' weist zwei elastische Schenkel 14', 14" auf, die sich von dem ersten Ende 8 des Haltearmes 6' jeweils bogenförmig in Richtung einer die Enden der Schenkel 14', 14" verbindenden Verbindungsplatte 15' erstrecken. Die Verbindungsplatte 15' ist - wie die Halteplatte 9' - parallel zur Vertikalstrebe 5' angeordnet. Damit der elastische Abschnitt 13' in Z-Richtung nachgiebig ausgebildet ist, weisen die kelchförmig verlaufenden Schenkel 14', 14" Materialverdünnungen und/oder Ausnehmungen 16' oder einen Schlitz 17' auf.

In einem Bereich zwischen den Schenkeln 14', 14" des elastischen Abschnitts 13' ist ein Einstellelement 18' zur Verstellung des Scheinwerfers in Y-Richtung (Verstellrichtung V) angeordnet. Das Einstellelement 18' ist als ein Exzen-terelement ausgebildet, das eine kreisförmige Mitnahmefläche 19' aufweist, dessen Mittelpunkt M in einem Abstand E zu einer Drehachse A des Exzenterelementes 18' angeordnet ist. Alternativ kann die Mitnahmefläche 19' auch bogenförmig ausgebildet sein, so dass durch Verdrehen des Einstellelementes 18' ein exzentrischer Nocken verdreht wird. Der Abstand E ist der maximale Verstellweg, um den der Haltearm 6' in Y-Richtung verstellt werden kann.

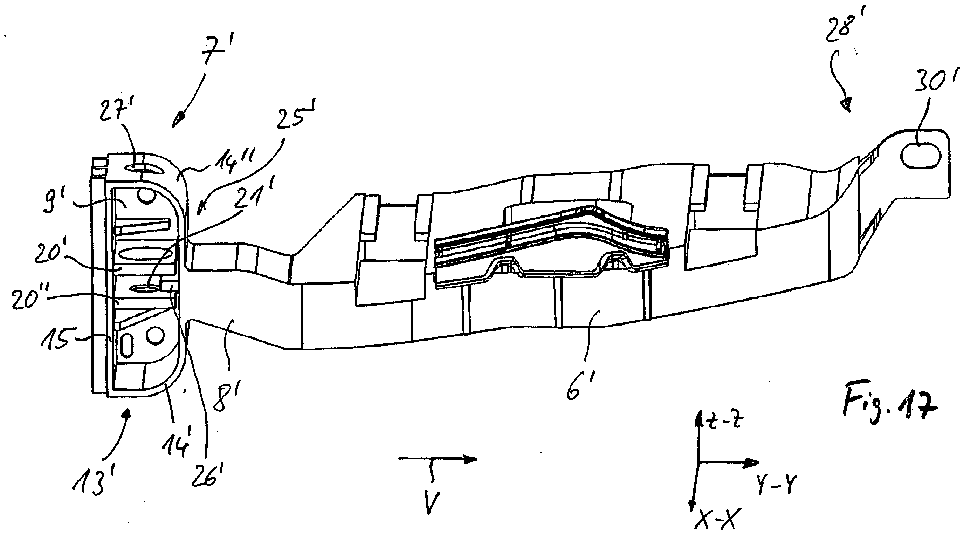

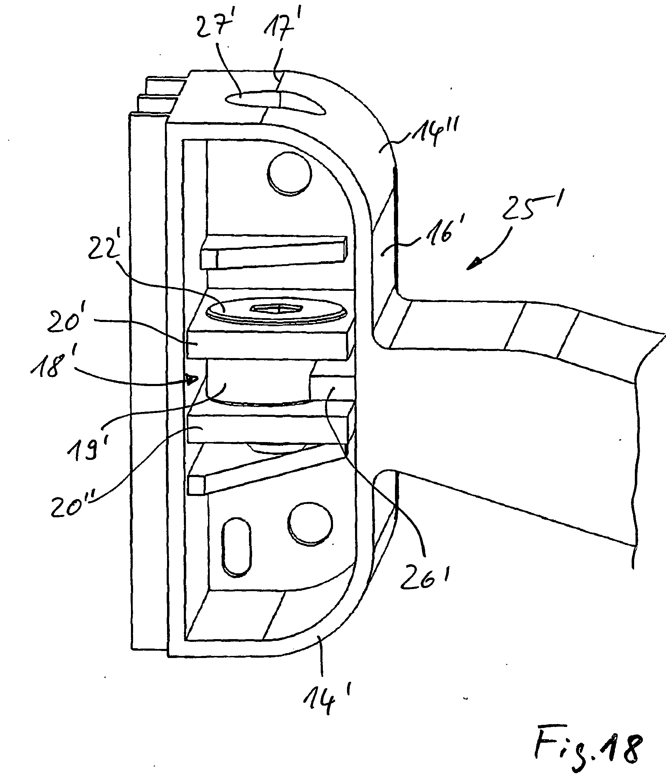

Wie insbesondere aus den Figuren 17 und 18 ersichtlich ist, ragen von der Halteplatte 9' und/oder von der Verbindungsplatte 15' Tragelemente 20' ab, die Öffnungen 21' aufweisen zur Aufnahme des Exzenterelementes 18'. Ein oberes Tragelement 20' ist derart ausgebildet, dass das Exzenterelement 18' von oben in dasselbe eingesetzt werden kann, wobei ein Exzenterkopf 22' auf einer Oberseite des Tragelementes 20' zur Anlage kommt. Das untere Tragelement 20" weist eine solche Öffnung auf, dass ein sich an den Exzenterkopf 22' anschließender Exzenterschaft 23' mit einem endseitigen Verjüngungsabschnitt 24' in die Öffnung 21' des unteren Tragelementes 20" eingreift. Zwischen dem oberen Tragelement 20' und dem unteren Tragelement 20" erstreckt sich in der eingesetzten Position des Exzenterelementes 18' ein oberer Abschnitt des Exzenterschaftes 23', der die Mitnahmefläche 19' aufweist.

Von einem Scheitelbereich 25 des elastischen Abschnitts 13' ragt in einem Zwischenraum zwischen den Schenkeln 14', 14" ein Anschlagelement 26' ab, das mit der Mitnahmefläche 19' des Exzenterelementes 18' zusammenwirkt. Das Anschlagelement 26' erstreckt sich in einem Bereich zwischen dem oberen Tragelement 20' und dem unteren Tragelement 20".

Der Exzenterkopf 22' weist eine versenkte Innensechskantform auf, so dass das Exzenterelement 18' mittels eines Innensechskantschlüssels (Inbusschlüssel)betätigbar ist. Zu diesem Zweck weist der obere Schenkel 14' eine Durchgangsbohrung 27' auf, so dass ein Monteur das Werkzeug von oben an den Exzenterkopf 22' ansetzen kann.

Nach einer nicht dargestellten alternativen Ausführungsform der Erfindung kann das Exzenterelement 18' auch um 90° versetzt angeordnet sein, so dass sich die Drehachse A in X-Richtung erstreckt. Hierdurch könnte das Exenterelement 18' auch mittels eines Einstellwerkzeugs von vorne betätigt werden.

Nach einer weiteren alternativen Ausführungsform kann das Exzenterelement 18' zwischen den Schenkel 14', 14" auch derart angeordnet sein, dass die Drehachse A bzw. die Mittelachse M des Exzenterelementes 18' in einem Winkel zu der Z-Richtung und der X-Richtung angeordnet ist. Hierdurch ist ein an die Bauraumverhältnisse des Kraftfahrzeugs angepasstes Ansetzen des Einstellwerkzeuges an das Exzenterelement 18' gewährleistet. Die Mitnahmefläche des Exzenterelementes 18' wäre dann jeweils so geformt, dass durch Drehung des Exzenterelementes 18' um seine Mittelachse M eine Verstellkraft in Verstellrichtung V auf das Anschlagelement 26' wirkt.

In Abhängigkeit von der Drehstellung des Exzenterelementes 18' wird eine Verstellkraft auf das Anschlagelement 26' ausgeübt, die das Anschlagelement 26' in Verstellrichtung V verstellt. Gleichzeitig erfolgt eine Dehnung oder Stauchung der Schenkel 14', 14", so dass der Haltearm 6' in eine gewünschte Verstellposition in Verstellrichtung V verbracht werden kann.

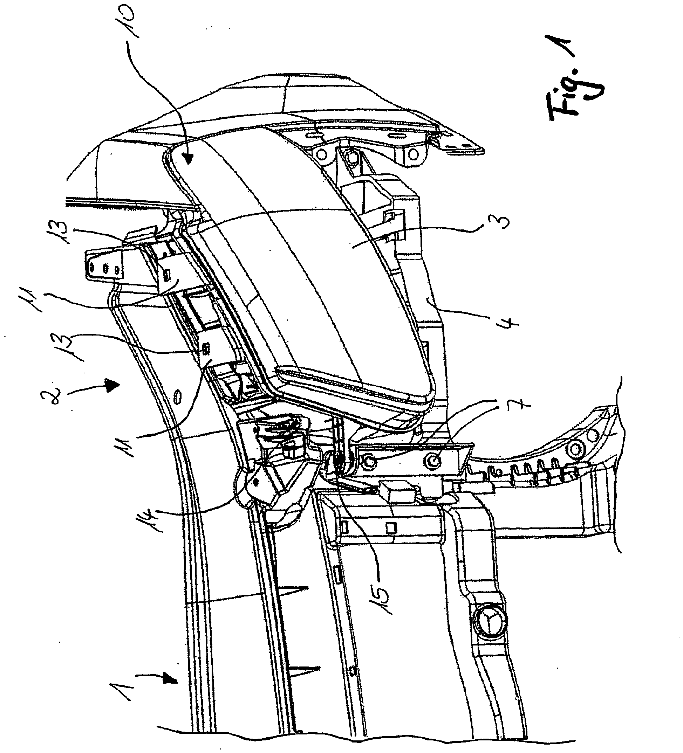

Vorzugsweise befindet sich die exzentrische Mitnahmefläche 19' (Nocken) in der Ausgangsstellung auf einer dem Haltearm 6' abgewandten Seite. Zum Verbringen des Scheinwerfers 3' in die vorgesehene Verstellposition gemäß Figur 1 unter Bildung einer Nullfuge zu dem Seitenteil 12' wird das Exzen-terelement 18' soweit verdreht, dass die exzentrische Mitnahmefläche 19' (Nocken) nach und nach unter Erhöhung einer Verstellkraft auf das Anschlagelement 26' drückt. Hierdurch wird der Haltearm 6' zusammen mit dem Scheinwerfer 3' in Y-Richtung weg von der Vertikalstrebe 5' bewegt, bis die Randkante 11' an dem Seitenteil 12' zur Anlage kommt. Nun ist der Scheinwerfer 3' in Y-Richtung ausgerichtet, so dass der Haltearm 6' an einem der Vertikalstrebe 5' abgewandten zweiten Ende 28' über Befestigungsmittel 29' an dem Seitenteil 12' fixiert werden kann. Das Sollmaß in Y-Richtung ist somit erreicht.

Das Sollmaß in X-Richtung kann durch die Elastizität des Haltesteges 7' erreicht werden.

Das Sollmaß in Z-Richtung kann durch das als Bolzen ausgebildete Befestigungsmittel 29' im Bereich des zweiten Endes 28' des Haltearms 6' eingestellt werden. Der Bolzen 29' erstreckt sich nicht nur durch ein Langloch 30' des zweiten Endes 28' des Haltearms 6', sondern auch in einer weiteren nicht dargestellten Bohrung der Fahrzeugkarosserie, wobei die Relativlage des Bolzens 29' zu der Bohrung der Fahrzeugkarosserie in Z-Richtung einstellbar ist.

Das Ausrichtverfahren für den Scheinwerfer 3' wird im Folgenden näher erläutert:

Der Scheinwerfer 3' ist über nicht dargestellte Haltemittel an dem Haltearm 6' gehaltert. Der Haltearm 6' ist mittels des Haltestegs 7' an der Vertikalstrebe 3' des Montageträgers 2' fixiert.

Nach Ansetzen des Montageträgers 2' an die Vorderseite der Fahrzeugkarosserie wird das auf einer dem Haltesteg 7' abgewandten Seite angeordnete zweite Ende 28' des Haltearms 6' mittels des Bolzens 29' an dem Seitenteil 12' vorfixiert. Zu diesem Zweck weist das Langloch 29' des zweiten Endes 28' eine solche in Verstellrichtung V weisende Hauptachse auf, dass die Halteplatte 9' entsprechend des Abstandes E in Verstellrichtung V verschoben werden kann. Die Hauptachse des Langlochs 30' erstreckt sich in Y-Richtung.

Durch Betätigen des Einstellelementes 18' kann nun der Scheinwerfer 3' in Y-Richtung ausgerichtet werden, bis er die vorgesehene Verstellposition unter Bildung des vorgegebenen Fugenverlaufes an dem Seitenteil 12' eingenommen hat. Nachfolgend erfolgt die endgültige Fixierung des Haltearms 6' durch Festziehen des Bolzens 29', so dass eine weitere Verschiebung des Scheinwerfers 3' in Y-Richtung nicht mehr möglich ist.

## Patentansprüche

1. Frontendmodul für Fahrzeuge mit einem Trägerteil (1) zur Verbindung des Frontendmoduls mit einem Karosserieteil des Fahrzeugs und mit einer Halteeinrichtung zur Befestigung einer Leuchteinheit (3) an dem Trägerteil (1), dass dem Trägerteil (1) Führungsmittel zugeordnet sind und dass die Halteeinrichtung einen mit dem Trägerteil (1) verbundenen Haltearm (4) umfasst, in dem die Führungsmittel (18) integriert angeordnet sind, dass der Haltearm (4) eine ebene Haltefläche (17) aufweist und sich die Führungsmittel (18) der Haltefläche (17) derart parallel zur Fahrzeuglängsmittelachse erstrecken, dass die Leuchteinheit (3) relativ zu dem Trägerteil (1) entlang einer geradlinigen Verstellrichtung (19) aus einer Betriebsstellung in eine vordere Reparaturstellung und vice versa geführt bewegbar ist, **dadurch gekennzeichnet, dass** der Haltearm (4, 26) in einem vorderen Bereich desselben einen aufrechten Anschlag (27) aufweist, derart, dass ein von einer Unterseite der Leuchteinheit (3) abragender Ansatz (28) der Leuchteinheit (3) in der Reparaturstellung an dem Anschlag (27) zur Anlage kommen kann.

2. Frontendmodul nach Anspruch 1, **dadurch gekennzeichnet, dass** die Leuchteinheit (3) quer zur Verstellrichtung (19) an dem Haltearm (4) festgelegt ist.

3. Frontendmodul nach Anspruch 1 oder 2, **dadurch gekennzeichnet, dass** der Haltearm (4) auf einer der Fahrzeuglängsmittelachse zugewandten Seite desselben über einen Haltesteg (5) mit dem Trägerteil (1) verbunden ist.

4. Frontendmodul nach einem der Ansprüche 1 bis 3, **dadurch gekennzeichnet, dass** ein auf einer der Fahrzeuglängsmittelachse abgewandten Seite des Haltearms (4) angeordnetes Ende desselben über Befestigungsmittel mit einem Seitenteil (9) des Fahrzeugs verbunden ist.

5. Frontendmodul nach einem der Ansprüche 1 bis 4, **dadurch gekennzeichnet, dass** der Haltearm (4) zumindest bereichsweise nachgiebig ausgebildet ist.

6. Frontendmodul nach einem der Ansprüche 1 bis 5, **dadurch gekennzeichnet, dass** der Ansatz (28) der Leuchteinheit (3) mit einem solchen Abstand zu einer vorderen Kante (31) einer Abschlussscheibe (29) der Leuchteinheit (3) angeordnet werden kann, dass die Bewegung der Leuchteinheit (3) zwischen der Betriebsstellung und der Reparaturstellung innerhalb eines vorgegebenen maximalen Verstellweges (S) erfolgt.

7. Frontendmodul nach einem der Ansprüche 1 bis 6, **dadurch gekennzeichnet, dass** die Haltefläche (17) als Führungsmittel (18) mindestens eine ebene Schiene (20) aufweist, entlang derer jeweils ein Schlittenelement (22) der Leuchteinheit (3) geführt lagerbar ist.

8. Frontendmodul nach einem der Ansprüche 1 bis 7, **dadurch gekennzeichnet, dass** die Leuchteinheit (3) an einem Ende des Haltestegs (5) und/oder an einer Längsstrebe (12) des Trägerteils (1) über eine Befestigungsschraube lösbar befestigt ist, wobei die Leuchteinheit (3) zumindest in Verstellrichtung (19) festlegbar ist.

9. Frontendmodul nach einem der Ansprüche 1 bis 8, **dadurch gekennzeichnet, dass** die Befestigungsschraube derart ausgebildet ist, dass sie werkzeugfrei betätigbar ist.

10. Frontendmodul nach einem der Ansprüche 1 bis 9, **dadurch gekennzeichnet, dass** der Haltearm (4) L-förmig ausgebildet ist und dass der Haltearm (4) zumindest in einem Eckbereich desselben nachgiebig ausgebildet ist.

11. Frontendmodul nach einem der Ansprüche 1 bis 10, **dadurch gekennzeichnet, dass** die Halteeinrichtung eine Lasche (41, 51, 63, 71) umfasst, mittels derer die Leuchteinheit lösbar an dem Trägerteil (1) befestigbar ist, dass die Lasche (41, 51, 63, 71) ein über Befestigungsmittel mit dem Trägerteil (1) verbundenes erstes Laschenelement (42, 52, 64, 72) aufweist und ein mit der Leuchteinheit (3) verbundenes zweites Laschenelement (43, 53, 65, 73) aufweist, dass das erste Laschenelement (42, 52, 64, 72) und das zweite Laschenelement (43, 53, 65, 73) lösbar miteinander verbunden sind, derart, dass sie sich in der Betriebsstellung der Leuchteinheit (3) stets in einer definierten gleichen Relativlage zueinander befinden.

12. Frontendmodul nach Anspruch 11, **dadurch gekennzeichnet, dass** das erste Laschenelement (42, 52, 64, 72) und/oder das zweite Laschenelement (43, 53, 65, 73) eine Führungsfläche aufweist, entlang derer das erste Laschenelement (42, 52, 64, 72) und das zweite Laschenelement (43, 53, 65, 73) zumindest teilweise zwischen der Betriebsstellung und der Reparaturstellung der Leuchteinheit (3) in Verstellrichtung relativ zueinander führbar sind.

13. Frontendmodul nach Anspruch 11 oder 12, **dadurch gekennzeichnet, dass** das erste Laschenelement (42, 52, 64, 72) kraftschlüssig oder formschlüssig mit dem zweiten Laschenelement (43, 53, 65, 73) verbindbar ist.

14. Frontendmodul nach einem der Ansprüche 11 bis 13, **dadurch gekennzeichnet, dass** das erste Laschenelement (42, 52, 64, 72) und/oder das zweite Laschenelement (43, 53, 65, 73) Kopplungsmittel (49, 50, 55, 56) umfasst, derart, dass das erste Laschenelement (42, 52, 64, 72) und das zweite Laschenelement (43, 53, 65, 73) zumindest in der Betriebsstellung der Leuchteinheit (3) in zwei orthogonal zueinander stehenden Richtungen, die senkrecht zu der Verstellrichtung (19) verlaufen, vorpositioniert sind.

15. Frontendmodul nach einem der Ansprüche 11 bis 14, **dadurch gekennzeichnet, dass** das erste Laschenelement (42, 52, 64, 72) und das zweite Laschenelement (43, 53, 65, 73) in der Betriebsstellung der Leuchteinheit (3) über orthogonal zu der Verstellrichtung (19) wirkende Befestigungsmittel in der Relativlage zueinander festgelegt sind.

16. Frontendmodul nach einem der Ansprüche 11 bis 15, **dadurch gekennzeichnet, dass** die Lasche (11, 41, 51, 63, 71) in einem oberen Randbereich (10) der Leuchteinheit (3) und der Haltearm (4) in einem unteren Randbereich (21) der Leuchteinheit (3) angeordnet ist.

17. Frontendmodul nach einem der Ansprüche 12 bis 16, **dadurch gekennzeichnet, dass** das erste Laschenelement (42, 52, 64, 72) an einer Längsstrebe (12) des Trägerteils (1) befestigt ist.

18. Frontendmodul nach einem der Ansprüche 12 bis 17, **dadurch gekennzeichnet, dass** die Lasche (11, 41, 51, 63, 71) langgestreckt und parallel zur Verstellrichtung (19) ausgebildet ist.

## Claims

1. Front end module for vehicles having a supporting member (1) to connect the front end module to a body component of the vehicle and comprising a holding device for attaching a lamp unit (3) to said supporting member (1) wherein guide means are assigned to the supporting member (1), wherein the holding device comprises a holding arm (4) fixed to the supporting member (1) into which arm there are guide means (18) integrated, and wherein the holding arm (4) has a flat retaining surface (17) extending parallel to the vehicle longitudinal axis in such a way that the lamp unit (3) is movable from an operative position to a forward repair position and vice versa along a linear adjusting direction (19), **characterized in that** in a forward area of the holding arm (4, 26) there is an upright stop member (27) fitted such that a lug (28) protruding from the underside of the lamp unit (3) may be brought into contact with said stop member (27) in the repair position.

2. Front end module according to Claim 1, **characterized in that** the lamp unit (3) is fixed to the holding arm (4) cross to the adjusting direction (19).

3. Front end module according to Claim 1 or 2, **characterized in that** the holding arm (4) is connected to the supporting member (1) via a holding web (5) on a side facing the vehicle longitudinal axis.

4. Front end module according to any of the preceding Claims 1 to 3, **characterized in that** an end of the holding arm (4) is connected to a side portion (9) of the vehicle on a side of said holding arm (4) that is facing away from the vehicle longitudinal axis.

5. Front end module according to any of the preceding Claims 1 to 4, **characterized in that** the holding arm (4) is flexible in sections at least.

6. Front end module according to any of the preceding Claims 1 to 5, **characterized in that** the lug (28) of the lamp unit (3) can be arranged such a distance away from a forward edge (31) of a lens (29) of the lamp unit (3) that movement of said lamp unit (3) between said operative position and said repair position is accomplished within a predetermined maximum adjusting stroke (S).

7. Front end module according to any of the preceding Claims 1 to 6, **characterized in that** the retaining surface (17) has guide means (18) in the form of at least one flat rail (20) along which a sled element (22) of the lamp unit (3) is guided.

8. Front end module according to any of the preceding Claims 1 to 7, **characterized in that** the lamp unit (3) is detachably secured to one end of the holding web (5) and/or to a longitudinal brace (12) of the supporting member (1) by means of a fixing screw whereby the lamp unit (3) may be immobilized in the adjusting direction (19).

9. Front end module according to any of the preceding Claims 1 to 3, **characterized in that** the fixing screw is designed such as to be operable without tool.

10. Front end module according to any of the Claims 1 to 9, **characterized in that** the holding arm (4) is L-shaped and flexible in one corner area at least.

11. Front end module according to any of the Claims 1 to 10, **characterized in that** the holding device comprises a tab (41, 51, 63, 71) permitting to detachably secure the lamp unit to the supporting member (1), that said tab (41, 51, 63, 71) includes a first tab element (42, 52, 64, 72) connected to the supporting member (1) with the aid of fixing means and a second tab element (43, 53 65, 73) connected to the lamp unit (3), and that said first tab element (42, 52, 65, 72) and said second tab element (43, 53, 65, 73) are detachably joined to each other such that while in the operative position of the lamp unit (3) they are always in the same defined position relative to each other.

12. Front end module according to Claim 11, **characterized in that** the first tab element (42, 52, 64, 72) and/or the second tab element (43, 53, 65, 73) comprise a guide face along which the first tab element (42, 52, 64, 72) and the second tab element (43, 53, 65, 73) may at least partly be guided relative to each other between the operative position and the repair position of the lamp unit (3) in adjusting direction.

13. Front end module according to Claim 11 or 12, **characterized in that** the first tab element (42, 52, 64, 72) is adapted to be positively or non-positively connected to the second tab element (43, 53, 65, 73).

14. Front end module according to any of the preceding Claims 11 to 13, **characterized in that** the first tab element (42, 52, 64, 72) and the second tab element (43, 53, 65, 73) comprise coupling means (49, 50, 55, 56) such that said first tab element (42, 52, 64, 72) and said second tab element (43, 53, 65, 73) get prepositioned in two orthogonal directions extending perpendicular to the adjusting direction (19) in the operative position of the lamp unit (3) at least.

15. Front end module according to any of the preceding Claims 11 to 14, **characterized in that** the first tab element (42, 52, 64, 72) and the second tab element (43, 53, 65, 73) are in the operative position of the lamp unit (3) fixed in their positions relative to each other with the aid of fixing means that act orthogonal to the adjusting direction (19).

16. Front end module according to any of the preceding Claims 11 to 15, **characterized in that** the tab (11, 41, 51, 63, 71) is disposed in an upper marginal area (10) of the lamp unit (3) and the holding arm (4) in a lower marginal area (21) of the lamp unit (3).

17. Front end module according to any of the preceding Claims 12 to 16, **characterized in that** the first tab element (42, 52, 64, 72) is attached to a longitudinal brace (12) of the supporting member (1).

18. Front end module according to any of the preceding Claims 12 to 17, **characterized in that** the tab (11, 41, 51, 63, 71) is of elongate shape and arranged parallel to the adjusting direction (19).

## Revendications

1. Module d'extrémité avant pour véhicules automobiles, qui est doté d'un élément de support (1) pour relier ledit module d'extrémité avant à une pièce de la carrosserie du véhicule automobile, et d'un dispositif de fixation pour la fixation d'une unité d'éclairage (3) sur l'élément de support (1), sachant que des moyens de guidage sont associés à l'élément de support (1) et que le dispositif de fixation comprend un bras de fixation (4)), relié à l'élément de support (1), dans lequel les moyens de guidage (18) sont intégrés, que le bras de fixation (4)) présente une surface de fixation (17) plane et que les moyen de guidage (18) de ladite surface de fixation (17) s'étendent parallèlement à l'axe central longitudinal du véhicule automobile, de sorte que l'unité d'éclairage (3) puisse être déplacée, par rapport à l'élément de support (1), dans une direction de déplacement (19) en ligne droite, entre une position de service et une position de réparation et vice versa, **caractérisé en ce que** le bras de fixation (4, 26) présente, dans la zone avant, une butée (27) verticale, de sorte que, dans la position de réparation, un taquet (28) de l'unité d'éclairage (3), en saillie d'une face inférieure de ladite unité d'éclairage (3), puisse venir porter contre ladite butée (27).

2. Module d'extrémité avant selon la revendication 1, **caractérisé en ce que** l'unité d'éclairage (3) est fixée sur le bras de fixation (4)), transversalement par rapport à la direction de déplacement (19).

3. Module d'extrémité avant selon revendication 1 ou 2, **caractérisé en ce que** le bras de fixation (4)) est relié à l'élément de support (1), sur une face de celui-ci, orientée vers l'axe longitudinal médian du véhicule automobile, par l'intermédiaire d'une patte de support (5).

4. Module d'extrémité avant selon l'une des revendications 1 à 3, **caractérisé en ce qu'**une extrémité du bras de fixation (4)), agencée sur une face de ce dernier, orientée vers l'axe central longitudinal du véhicule automobile, est reliée à une pièce latérale (9) du véhicule automobile, au moyen d'éléments de fixation.

5. Module d'extrémité avant selon l'une des revendications 1 à 4, **caractérisé en ce que** le bras de fixation (4)) est de conception flexible, au moins par sections.

6. Module d'extrémité avant selon l'une des revendications 1 à 5, **caractérisé en ce que** le taquet (28) de l'unité d'éclairage (3) peut être installé sur un bord avant (31) d'une glace terminale (29) de l'unité d'éclairage (3) avec un intervalle tel que le déplacement de l'unité d'éclairage (3) entre la position de service et la position de réparation s'effectue sur un parcours (S) maximal, prédéterminé.

7. Module d'extrémité avant selon l'une des revendications 1 à 6, **caractérisé en ce que** la surface de fixation (17) présente, en tant que moyen de guidage (18), au moins un rail (20), le long duquel un coulisseau (22) de l'unité d'éclairage (3) peut être respectivement guidé.

8. Module d'extrémité avant selon l'une des revendications 1 à 7, **caractérisé en ce que** l'unité d'éclairage (3) est fixée de manière amovible à une extrémité de la patte de fixation (5) et / ou à une entretoise longitudinale (12) de l'élément de support (1), au moyen d'une vis de fixation, sachant que l'unité d'éclairage (3) peut être fixée au moins dans la direction de déplacement (19).

9. Module d'extrémité avant selon l'une des revendications 1 à 8, **caractérisé en ce que** la vis de fixation est réalisée de sorte qu'elle puisse être actionnée sans outil.

10. Module d'extrémité avant selon l'une des revendications 1 à 9, **caractérisé en ce que** le bras de fixation (4) est réalisé en forme de L et que ledit bras de fixation (4)) est de conception flexible, au moins dans une zone d'angle de celui-ci.

11. Module d'extrémité avant selon l'une des revendications 1 à 10, **caractérisé en ce que** le dispositif de fixation comprend une languette (41, 51, 63, 71), au moyen de laquelle l'unité d'éclairage peut être fixée, de manière amovible, sur l'élément de support (1), que ladite languette (41, 51, 63, 71) présente un premier élément (42, 52, 64, 72), relié à l'élément de support (1) par des moyens de fixation, et un deuxième élément (43, 53, 65, 73), relié à l'unité d'éclairage (3), que le premier élément (42, 52, 64, 72) et le deuxième élément (43, 53, 65, 73) de la languette sont reliés ensemble de manière amovible, de sorte qu'ils se trouvent toujours dans une même position définie par rapport l'un à l'autre, quand l'unité d'éclairage (3) est en position de service.

12. Module d'extrémité avant selon la revendication 11, **caractérisé en ce que** le premier élément (42, 52, 64, 72) et / ou le deuxième élément (43, 53, 65, 73) de la languette présente / présentent une surface de guidage, le long de laquelle le premier élément (42, 52, 64, 72) et le deuxième élément (43, 53, 65, 73) de la languette peuvent être, au moins partiellement, guidés l'un par rapport à l'autre dans la direction de déplacement, entre la position de service et la position de réparation de l'unité d'éclairage (3).

13. Module d'extrémité avant selon revendication 11 ou 12, **caractérisé en ce que** le premier élément (42, 52, 64, 72) de la languette peut être relié au deuxième élément (43, 53, 65, 73) de la languette par adhérence ou par emboîtement.

14. Module d'extrémité avant selon l'une des revendications 11 à 13, **caractérisé en ce que** le premier élément (42, 52, 64, 72) et / ou le deuxième élément (43, 53, 65, 73) de la languette comprend / comprennent des moyens de couplage (49, 50, 55, 56) de sorte que le premier élément (42, 52, 64, 72) et le deuxième élément (43, 53, 65, 73) de la languette soient pré-positionnés, au moins quand l'unité d'éclairage (3) est en position de service, dans deux directions orientées orthogonalement l'une par rapport à l'autre, qui s'étendent perpendiculairement à la direction de déplacement (19).

15. Module d'extrémité avant selon l'une des revendications 11 à 14, **caractérisé en ce que**, quand l'unité d'éclairage (3) est en position de service, le premier élément (42, 52, 64, 72) et le deuxième élément (43, 53, 65, 73) de la languette peuvent être fixés dans la position relative, l'un par rapport à l'autre, avec des moyens de fixation, qui agissent orthogonalement par rapport à la direction de déplacement (19).

16. Module d'extrémité avant selon l'une des revendications 11 à 15, **caractérisé en ce que** la languette (11, 41, 51, 63, 71) est agencée dans une zone marginale, supérieure (10) de l'unité d'éclairage (3) et que le bras de fixation (4)) est agencé dans une zone marginale, inférieure (21) de ladite l'unité d'éclairage (3).

17. Module d'extrémité avant selon l'une des revendications 12 à 16, **caractérisé en ce que** le premier élément (42, 52, 64, 72) de la languette est fixé sur une entretoise longitudinale (12) de l'élément de support (1).

18. module d'extrémité avant selon l'une des revendications 12 à 17, **caractérisé en ce que** la languette (11, 41, 51, 63, 71) est allongée et parallèle à la direction de déplacement (19).
